(19) Europäisches Patentamt
European Patent Office
Office européen des brevets

(11) EP 1 039 805 B1

(12) EUROPÄISCHE PATENTSCHRIFT

(45) Veröffentlichungstag und Bekanntmachung des Hinweises auf die Patenterteilung:
**06.11.2002 Patentblatt 2002/45**

(21) Anmeldenummer: **98964520.5**

(22) Anmeldetag: **15.12.1998**

(51) Int Cl.7: **A01N 43/40**

(86) Internationale Anmeldenummer:
**PCT/EP98/08225**

(87) Internationale Veröffentlichungsnummer:
**WO 99/031951 (01.07.1999 Gazette 1999/26)**

# (54) FUNGIZIDE MISCHUNGEN AUF DER BASIS VON AMIDVERBINDUNGEN

FUNGICIDE MIXTURES BASED ON AMIDE COMPOUNDS

MELANGES FONGICIDES A BASE DE COMPOSES AMIDE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756378**

(43) Veröffentlichungstag der Anmeldung:
**04.10.2000 Patentblatt 2000/40**

(60) Teilanmeldung:
**02010311.5 / 1 228 691**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **EICKEN, Karl**
  **D-67157 Wachenheim (DE)**
- **HAMPEL, Manfred**
  **D-67435 Neustadt (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:

**EP-A- 0 209 234** **EP-A- 0 256 503**
**EP-A- 0 545 099** **WO-A-97/10716**
**WO-A-97/39628** **GB-A- 2 143 736**

- **CHEMICAL ABSTRACTS, vol. 83, no. 3, 21. Juli 1975 Columbus, Ohio, US; abstract no. 23313, T.BAICU ET AL.: "Action of carboxin and mancozeb fungicide mixtures in the control of some wheat and barley diseases" XP002100237 & ARCH. PHYTOPATHOL. PFLANZENSHUTZ, Bd. 10, Nr. 6, 1974, Seiten 395-404,**
- **CHEMICAL ABSTRACTS, vol. 86, no. 11, 14. März 1977 Columbus, Ohio, US; abstract no. 66780, K.E.HANSEN ET AL.: "Experiments with fungicides and insecticides in agricultural crops 1975" XP002100238 & TIDSSKR. PLANTEAVL., Bd. 80, Nr. 4, 1976, Seiten 525-540,**
- **CHEMICAL ABSTRACTS, vol. 97, no. 13, 27. September 1982 Columbus, Ohio, US; abstract no. 105496, E.A.SKORDA: "Evaluation offungicides as seed dressings against new strains of wheat bunt in Greece" XP002100239 & PROC.BR.CROP PROT. CONF.-PESTS DIS., Bd. 11, Nr. 1, 1981, Seiten 317-323,**
- **CHEMICAL ABSTRACTS, vol. 102, no. 17, 29. April 1985 Columbus, Ohio, US; abstract no. 144694, A.PANCONESI ET AL.: "Studies of the control of Seiridium (Coryneum) cardinale" XP002100240 & COMM. EUR. COMMUNITIES, [REP.] EUR (1984), EUR 9200, Seiten 47-55,**
- **CHEMICAL ABSTRACTS, vol. 88, no. 11, 13. März 1978 Columbus, Ohio, US; abstract no. 70331, J.BENADA ET AL.: "prospects for the chemical protection of cereal from rust" XP002100241 & AGROCHEMIA, Bd. 17, Nr. 11, 1977, Seiten 316-318,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Mischungen zur Bekämpfung von Schadpilzen, die

a) eine Amidverbindung der Formel Ib

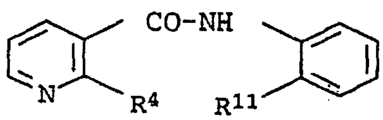

(Ib)

worin

$R^4$ für Halogen steht und
$R^{11}$ für Phenyl steht, das durch Halogen substituiert ist;

und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId);

in einer synergistisch wirksamen Menge.

Die Amidverbindungen der Formel I sind an sich bekannt und in der Literatur beschrieben (EP-A 545 099).
In der WO 97/08952 werden fungizide Mischungen beschrieben, die neben Verbindungen der Formel I noch Fenazaquin als weitere Komponenten enthalten. Diese werden als gut wirksam gegen Botrytis beschrieben.
Ebenfalls bekannt sind die Dithiocarbamate II (IIa: common name: Mancozeb, US-A 3,379,610; IIb: common name: Maneb, US-A 2,504,404; IIc: ehem. common name: Metiram, US-A 3,248,400; IId: common name: Zineb, US-A 2,457,674), deren Herstellung und deren Wirkung gegen Schadpilze.
Aus EP-A 209 234; CA 83: 23313 (1975); CA 86: 66780 (1977); CA 97: 105 496 (1982), CA 102: 144694 (1985) und CA 88: 70331 (1978) sind fungizide Mischungen von strukturfernen Amidverbindungen und Dithiocarbamaten bekannt.
Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).
Demgemäß wurden die eingangs definierten Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Verbindungen I oder II allein.
Die erfindungsgemäßen Mischungen wirken synergistisch und sind daher zur Bekämpfung von Schadpilzen und insbesondere Rebenmehltau besonders geeignet.
Im Rahmen der vorliegenden Erfindung steht Halogen für Fluor, Chlor, Brom und Jod und insbesondere für Fluor, Chlor und Brom. $R^4$ bedeudet insbesondere Chlor.
Gemäß einer bevorzugten Ausführungsform enthalten die erfindungsgemäßen Mittel als Amidverbindung eine Verbindung der Formel Ib, worin die Phenylgruppe in ortho-Stellung des Anilins durch 1 bis 5 Halogenatome substituiert ist.
Gemäß einer weiteren bevorzugten Ausführungsform enthalten die erfindungsgemäßen Mittel als Amidverbindung eine Verbindung der Formel Ia,

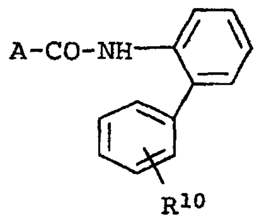

(Ia)

worin

A für

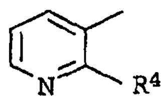

(A2)

steht;

$R^4$ für Chlor steht,

$R^{10}$ für Halogen steht.

Brauchbare Amidverbindungen der Formel I sind in der EP-A-545 099 und 589 301 genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, genügt bereits ein geringer Anteil an Amidverbindung der Formel I. Vorzugsweise werden Amidverbindung und Wirkstoff der Formel II in einem Gewichtsverhältnis im Bereich von 50: 1 bis 1:50, insbesondere 10:1 bis 1:10 eingesetzt. Dabei ist es auch möglich, ternäre Mischungen oder Mischungen mit mehr als drei aktiven Bestandteilen zu verwenden, die neben Amidverbindungen I sowohl Verbindungen II als auch andere Verbindungen enthalten. In derartigen Mischungen liegt das Mischungsverhältnis der Verbindungen untereinander in der Regel im Bereich von 50:1 bis 1:50, vorzugsweise 10:1 bis 1:10.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von Mehltau in Getreide- und Rebenkulturen einsetzbar.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I und II der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (W) wird nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.
Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

- E zu erwartender Wirkungsgrad, ausgedrückt in % der unbehandel- ten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Anwendungsbeispiel 1 - Wirksamkeit gegen Phytophthora infestans an Tomaten

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen Zoosporenaufschwemmung von Phytophthora infestans infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.
Als Verbindungen der Formel I wurden folgende Komponenten eingesetzt:

I.1

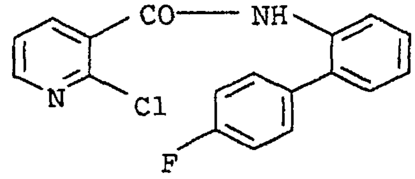

I.2

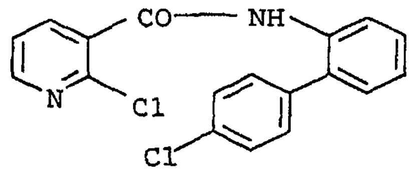

Die Ergebnisse sind den nachfolgenden Tabellen 1 und 2 zu entnehmen.

Tabelle 1

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | 0 (99 % Befall) | 0 |
| 2V | Verbindung I.1 | 100 | 0 |
| | | 50 | 0 |
| 3V | Verbindung I.2 | 50 | 0 |
| | | 25 | 0 |
| | | 12,5 | 0 |
| 4V | Verbindung IIa | 12,5 | 70 |

Tabelle 2

| Bsp. | erfindungsgemäße Mischungen (Gehalt in ppm) | beobachteter Wirkungsgrad | berechneter Wirkungsgrad *) |
|---|---|---|---|
| 6 | 12,5 ppm I.2 + 12,5 ppm IIa | 90 | 70 |

*) berechnet nach der Colby-Formel

aus den Ergebnissen des Versuches geht hervor, daß der beobachtete Wirkungsgrad in allen Mischungsverhältnissen höher ist als nach der Colby-Formel vorausberechnete Wirkungsgrad.

**Patentansprüche**

**1.** Fungizide Mischungen, enthaltend als aktive Komponenten

a) eine Amidverbindung der Formel Ib

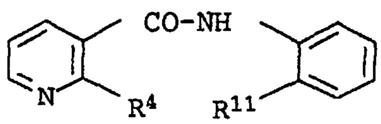

(Ib)

worin

$R^4$ für Halogen steht und
$R^{11}$ für Phenyl steht, das durch Halogen substituiert ist;

und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId);

in einer synergistisch wirksamen Menge.

**2.** Fungizide Mischung nach Anspruch 1, welche als Amidverbindung eine Verbindung der nachfolgenden Formeln enthält:

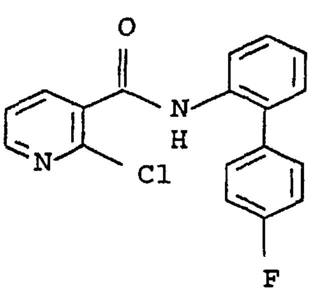

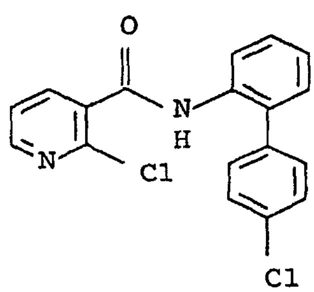

**3.** Fungizide Mischung nach einem der vorhergehenden Ansprüche, welche in zwei Teilen konditioniert ist, wobei der eine Teil die Amidverbindung I in einem festen oder flüssigen Träger enthält und der andere Teil die Verbindungen II in einem festen oder flüssigen Träger enthält.

**4.** Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden. Flächen oder Räume mit einer fungiziden Mischung gemäß einem der Ansprüche 1 bis 3 behandelt, wobei die Anwendung der Wirkstoffe Amidverbindung I und die Verbindung II gleichzeitig, und zwar gemeinsam oder getrennt, oder nacheinander erfolgen kann.

## Claims

**1.** A fungicidal mixture, comprising, as active components,

a) an amide compound of the formula Ib

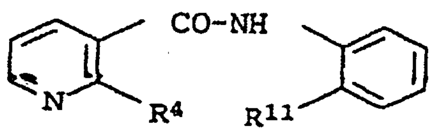

(Ib)

in which

$R^4$ is halogen and
$R^{11}$ is halogen-substituted phenyl

and

b) a dithiocarbamate (II), selected from the group consisting of

- manganese ethylenebis(dithiocarbamate) (zinc complex) (IIa),
- manganese ethylenebis(dithiocarbamate) (IIb),
- zinc ammoniate ethylenebis(dithiocarbamate) (IIc) and
- zinc ethylenebis(dithiocarbamate) (IId);

in a synergistically effective amount.

**2.** A fungicidal mixture as claimed in claim 1 which comprises, as amide compound, a compound of the formulae below

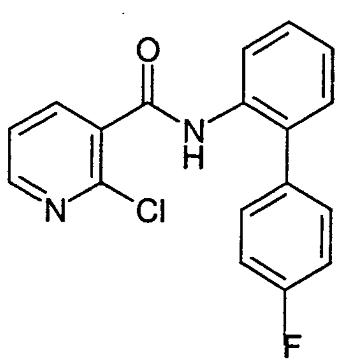

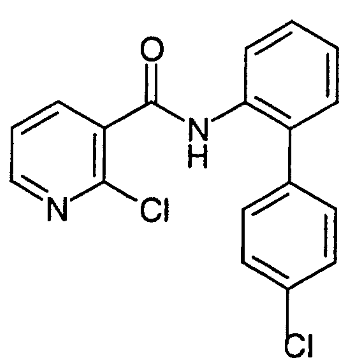

**3.** A fungicidal mixture as claimed in any of the preceding claims, which is conditioned in two parts, one part comprising the amide compound I in a solid or liquid carrier and the other part comprising the compounds II in a solid or liquid carrier.

**4.** A method for controlling harmful fungi, which comprises treating the fungi, their habitat or the materials, plants,

seeds, soils, areas or rooms to be protected against fungal attack with a fungicidal mixture as claimed in any of claims 1 to 3, where the application of the active components amide compound I and the compound II may be carried out simultaneously, that is either jointly or separately, or in succession.

## Revendications

**1.** Mélanges fongicides contenant en tant que composants actifs

a) un amide de formule Ib

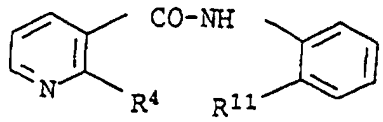

(Ib)

dans laquelle

$R^4$ représente un halogène et
$R^{11}$ représente un groupe phényle substitué par des halogènes ;

et
b) un dithiocarbamate II choisi dans le groupe suivant

- éthylènebis(dithiocarbamate) de manganèse (complexe de zinc) (IIa),
- éthylènebis(dithiocarbamate) de manganèse (IIb),
- éthylènebis(dithiocarbamate) ammoniacal de zinc (IIc) et
- éthylènebis(dithiocarbamate) de zinc (IId) ;

en quantité synergétique efficace.

**2.** Mélange fongicide selon la revendication 1, contenant en tant qu'amide un composé répondant à l'une des formules suivantes :

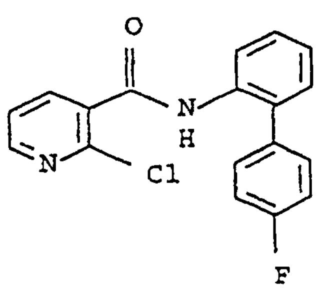

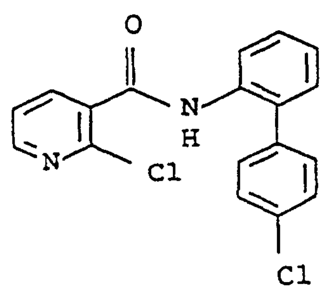

**3.** Mélange fongicide selon l'une des revendications qui précèdent, conditionné en deux parties, une partie contenant l'amide I dans un véhicule solide ou liquide et l'autre partie les composés II dans un véhicule solide ou liquide.

**4.** Procédé pour combattre les mycètes nuisibles, **caractérisé par le fait que** l'on traite les mycètes, leur habitat ou les matériaux, végétaux, semences, sols, aires ou locaux menacés d'une attaque par les mycètes par un mélange fongicide selon l'une des revendications 1 à 3, les substances actives, amide I et composé II, pouvant être appliquées en même temps, ensemble ou séparément, ou successivement.